**Europäisches Patentamt**

**European Patent Office**

**Office européen des brevets**

(19)

(11) Veröffentlichungsnummer : **0 116 721**
**B1**

(12)

# EUROPÄISCHE PATENTSCHRIFT

(45) Veröffentlichungstag der Patentschrift :
09.09.87

(51) Int. Cl.⁴ : **F 16 J 15/32**

(21) Anmeldenummer : **83113255.0**

(22) Anmeldetag : **31.12.83**

---

(54) **Wellendichtung.**

---

(30) Priorität : **13.01.83 DE 3300942**
**15.09.83 DE 3333264**

(43) Veröffentlichungstag der Anmeldung :
**29.08.84 Patentblatt 84/35**

(45) Bekanntmachung des Hinweises auf die Patenterteilung : **09.09.87 Patentblatt 87/37**

(84) Benannte Vertragsstaaten :
**DE FR GB IT**

(56) Entgegenhaltungen :
**DE-A- 3 120 795**
**DE-C-  739 401**
**GB-A- 1 091 397**
**US-A- 4 244 908**

(73) Patentinhaber : **GOETZE AG**
**Bürgermeister-Schmidt-Strasse 17**
**D-5093 Burscheid 1 (DE)**

(72) Erfinder : **Deuring, Hans**
**Im Eulenflug 29**
**D-5093 Burscheid (DE)**
Erfinder : **Ecker, Rainer, Dipl.-Ing.**
**Oppenhoff-Allee 159**
**D-5100 Aachen (DE)**
Erfinder : **Engelberth, Wolfgang, Dipl.-Ing.**
**Hegelstrasse 15**
**D-5090 Leverkusen 1 (DE)**
Erfinder : **Fritz, Erwin**
**Burscheider Strasse 385**
**D-5090 Leverkusen 3 (DE)**
Erfinder : **Iwen, Eckhard**
**Tannenweg 18**
**D-5090 Leverkusen 3 (DE)**
Erfinder : **Otto, Volkmar, Dipl.-Ing.**
**Quettinger Strasse 150**
**D-5090 Leverkusen 3 (DE)**

## Beschreibung

Die Erfindung betrifft eine Wellendichtung mit integriertem Laufring, bestehend aus einem formstabilen, profilierten Gehäuse mit einer Umfangsfläche zur drehfesten Aufnahme in einem Maschinenteil und mindestens einer, gegebenenfalls federbelasteten Dichtlippe aus elastischem Werkstoff, die radial auf einer axialen Lauffläche des auf ein korrespondierendes Maschinenteil drehfest aufziehbaren winkelförmigen Laufringes aufliegt, dessen Radialschenkel formschlüssig in dem Gehäuse gehalten ist sowie einem zwischen dem Radialschenkel des Laufringes und dem Gehäuse angeordneten Dichtkörper.

Durch die DE-A-31 20 795 ist eine Wellendichtung zwischen einem drehfesten und einem rotierenden Maschinenteil bekannt. Die Wellendichtung besteht aus zwei koaxial angeordneten formstabilen Teilen, die mittels kragenförmiger, abgewinkelter, axial verlaufender Ansätze formschlüssig ineinanderliegen. Die Dichtlippen eines am Radialschenkel des feststehenden Teiles angeformten Elastomerkörpers liegen auf der korrespondierenden Lauffläche des rotierenden Teiles auf. Axial zwischen beiden Teilen liegt ein ringförmiger Dichtkörper aus porösem Filtermaterial, z. B. aus einem offenzelligen Polyurethan, welches im eingebauten Zustand elastisch zusammendrückbar ist. Sinn und Zweck des Dichtkörpers sind darin zu sehen, das Eindringen von Fremdmedien beziehungsweise -körpern, wie z. B. Staub und Schlamm, in den abgedichteten Bereich zu verhindern. Nachteilig an der vorab beschriebenen Wellendichtung ist zu bemerken, daß der Dichtkörper zwar elastisch zusammendrückbar ist und somit eine gewisse Vorspannung ausübt, die jedoch bedingt durch die Materialwahl relativ schnell verlorengeht, da eine erhebliche Reibung zwischen dem Laufring und dem Dichtkörper bedingt durch Relativbewegung über einen großen Flächenbereich stattfindet, die gegebenenfalls sogar zur Zerstörung des Dichtkörpers führen kann.

Der Erfindung liegt daher die Aufgabe zugrunde, ausgehend von der vorab beschriebenen Wellendichtung, diese so zu verbessern, daß eine Beschädigung beziehungsweise Zerstörung des Dichtkörpers während des Betriebszustandes im wesentlichen ausgeschlossen ist und somit die Lebensdauer der gesamten Wellendichtung beträchtlich erhöht wird. Ferner soll verhindert werden, daß nach dem Einpreßvorgang der Wellendichtung auf die Welle beziehungsweise in ein Aufnahmegehäuse die einander gegenüberliegenden, üblicherweise aus Metall bestehenden Schenkel des Laufringes und des Gehäuses im Betriebszustand gegeneinanderlaufen und so zu Beschädigungen der Wellendichtung führen.

Diese Aufgabe wird erfindungsgemäß dadurch gelöst, daß der Dichtkörper aus einem unvollständig vernetzten Elastomer-Werkstoff besteht, der erst bei auftretender Betriebstemperatur vollständig vernetzt. Der vorzugsweise vom Schlauch abgestochene Dichtkörper, der im Neuzustand der Wellendichtung als Axialfeder wirkt, nimmt, bedingt durch die Weitervernetzung, erst während der Einlaufperiode seine endgültige Gestalt an. Durch diese Maßnahme wird erreicht, daß die Anfangs-Reibverluste wesentlich geringer als beim Stand der Technik ausfallen.

Vorzugsweise besteht der Dichtkörper aus Nitrilbutadien-Kautschuk und weist vor seiner Montage ein etwa rechteckiges Querschnittsprofil auf. Andere Materialien — wie z. B. Chloropren-Kautschuk, Styrolbutadien-Kautschuk oder dergleichen — mit anderen Profilen — wie z. B. gerundet, mehreckig oder dergleichen — sind jedoch im Rahmen der Erfindung auch verwendbar. Die Auswahl von Werkstoff und/oder Form sollten hierbei vom jeweiligen Einsatzgebiet der Wellendichtung beziehungsweise deren Kontur abhängig gemacht werden.

Einem weiteren Gedanken der Erfindung gemäß weist der den Dichtkörper aufnehmende Raum zwischen Gehäuse und Laufring ein zum Laufring sich erstreckendes konisches Querschnittsprofil auf. Durch diese Maßnahme wird sichergestellt, daß zum einen der Dichtkörper axial unter geringfügiger Auswölbung in dem Gehäuse fixiert werden kann und zum anderen, bedingt durch die eine konische Abstützfläche, sowohl eine Radialals auch eine Axialkraftkomponente im Neuzustand ausüben kann. Vorzugsweise weist der mit dem Dichtkörper im unvollständig vernetzten Zustand in Berührung stehende Radialschenkel des Laufringes eine konvex gekrümmte Berührungsfläche auf. Damit ist der Vorteil verbunden, daß nur eine relativ kleine Fläche des Radialschenkels während der Relativdrehbewegung mit dem Dichtkörper in Berührung kommt, der Verschleiß somit auch nur auf diesem Bereich begrenzt bleibt. Die im Neuzustand zunächst vorhandene Axialkraftkomponente wird während der Einlaufperiode, d. h. wahrend der Weitervernetzung des Dichtkörpers, aufgehoben, wobei sich der Einbausituation angepaßte Labyrinthspalte einstellen, die die Toleranzen und die vorgegebene Einbaulage ausgleichen.

Um nun eine Beschädigung der Wellendichtung bei der Montage zu vermeiden und gleichzeitig eine Wellendichtung zu schaffen, die universell von beiden Stirnflächen aus mit den korrespondierenden Maschinenteilen verbunden werden kann, wird ferner vorgeschlagen, daß im Bereich der einander etwa axial gegenüberliegenden Radialschenkel beziehungsweise Schenkelbereiche des Laufringes und des Gehäuses Anschlagflächen gebildet sind. Durch diese Maßnahme wird erreicht, daß die Anfangs-Reibverluste wesentlich geringer als beim Stand der Technik ausfallen. Durch die Anschlagflächen wird ferner gewährleistet, daß beim Einpreßvorgang klare Bezugflächen vorhanden sind, durch die Beschädigungen vermieden werden. Prinzipiell wäre es natürlich ausreichend, die Anschlagflächen einfach nach der Montage der Wellendichtung umzubördeln, hier könnte jedoch die Gefahr bestehen, daß diese im Betriebszustand noch gegeneinanderlaufen und so Störungen durch Temperaturerhöhung verursachen.

Eine bevorzugte Variante des Axialanschlages ist darin zu sehen, die Anschlagflächen aus einem selbstschmierenden Gleitlagerwerkstoff, wie z. B. Delrin oder dergleichen zu bilden, um so der unzulässigen Temperaturerhöhung innerhalb der Wellendichtung entgegenzutreten.

Verschiedene Möglichkeiten zur Anordnung innerhalb der Wellendichtung bieten sich an :

Zum einen besteht die Möglichkeit, die jeweilige Anschlagfläche scheibenförmig auszubilden und lose axial zwischen die jeweiligen Radialschenkel einzulegen. Eine andere Möglichkeit ist darin zu sehen, die Anschlagfläche fest, z. B. durch Verkleben oder dergleichen mit dem beziehungsweise den jeweiligen Radialschenkeln des Gehäuses und/oder des Laufringes zu verbinden.

Eine weitere Möglichkeit ist in Abhängigkeit vom jeweiligen Anwendungsfall darin zu sehen, den Elastomerwerkstoff der Dichtlippe zumindest bis in den zwischen den Anschlagflächen gebildeten Bereich des die Dichtlippe tragenden Gehäuses hinein zu verlängern. Durch diese Maßnahme wird zunächst eine deformierbare Anschlagfläche gebildet, die im Betriebszustand bei geringstmöglicher Reibung zwischen den Schenkeln des Laufringes und des Gehäuses zu geringster Temperaturerhöhung innerhalb der Wellendichtung führt.

Die Erfindung ist in der Zeichnung dargestellt und wird im folgenden näher beschrieben. Es zeigen :

Figur 1 Dichtungseinheit im Einbauzustand, d. h. mit vollständig vernetztem Dichtkörper

Figur 2 Dichtungseinheit mit nur teilweise vernetztem Dichtkörper in der Einbaulage

Figuren 3-5 Dichtungseinheit mit nur teilweise vernetztem Dichtkörper in der Einbaulage mit unterschiedlich angeordneten Anschlagflächen.

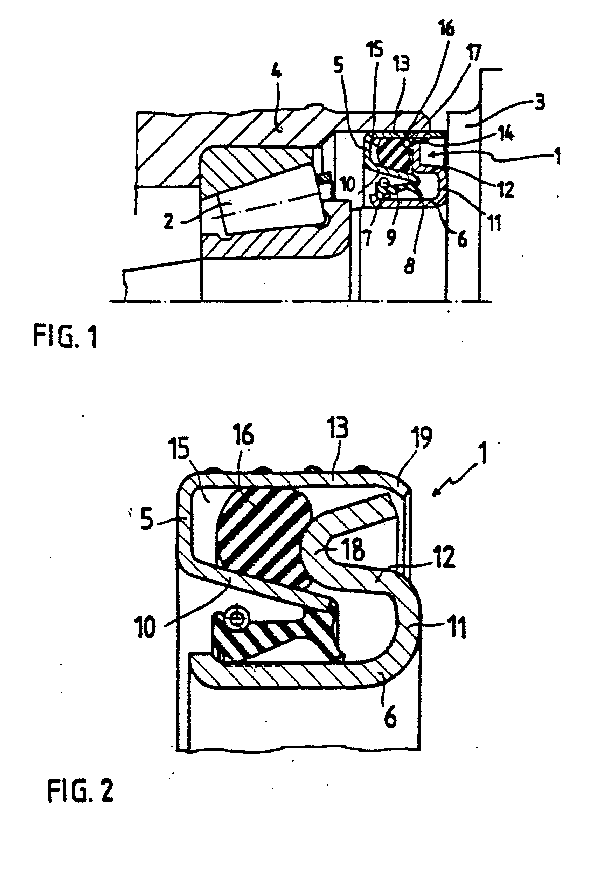

Figur 1 zeigt die erfindungsgemäße Wellendichtung 1 im eingebauten Zustand. Die Wellendichtung 1 ist hier als Abdichtung eines unter starker Schmutzeinwirkung stehenden Lagers 2 für das Rad 3 eines nicht weiter dargestellten Schleppers eingesetzt. Die Wellendichtung 1 besteht aus einem mit dem Lagergehäuse 4 drehfest verbundenen, ein etwa U-förmiges Querschnittsprofil aufweisenden Gehäuses 5, einem winkelförmigen Laufring 6, der formschlüssig in dem Gehäuse 5 gehalten ist, einem Dichtelement mit zwei Dichtlippen 7, 8, von denen die eine 7 federbelastet 9 ist. Die federbelastete Dichtlippe 7 weist in Richtung des abzudichtenden Mediums, d. h. in Richtung des Lagers 2, während die nicht federbelastete Dichtlippe 8 als reine Schmutzabdichtung dient. Der dem Laufring 6 zugewandte axial verlaufende Schenkel 10 des Gehäuses 5 ist in Richtung des Laufringes konisch sich verjüngend ausgebildet. Der Radialschenkel 11 des winkelförmigen Laufringes 6 ist etwa in der Ebene des konischen Gehäuseschenkels 10 zunächst axial auf diesen zu abgebogen 12, dann jedoch wieder auf den mit dem Lagergehäuse 4 zusammenwirkenden Axialschenkel 13 des Gehäuses 5 radial abgebogen. Die formschlüssige Verbindung zwischen Laufring 6 und Gehäuse 5 wird dadurch hergestellt, daß aus dem Axialschenkel 13 des Gehäuses 5 federnde Zungen 14 herausgebogen sind, die in Form eines Schnappverschlusses im zusammengebauten Zustand axial hinter den Radialschenkel 11 greifen. Die Wellendichtung 1 ist, wie vorab schon angesprochen, im eingebauten Zustand dargestellt. In dem zwischen den Schenkeln 10, 13 des Gehäuses 5 und dem Radialschenkel 11 begrenzten Raum 15 ist ein aus Nitrilbutadien-Kautschuk bestehender Dichtkörper 16 angeordnet, der im vorvernetzten Zustand in den Raum 15 eingebracht worden ist. Durch Temperatureinwirkung während der Einlaufperiode wurde der Dichtkörper 16 vollständig vernetzt und nahm sowohl dadurch, als auch durch die Relativdrehbewegung zwischen dem Dichtkörper 16 und dem Radialschenkel 11 seine endgültige Gestalt an. Durch den im Neuzustand als Axialfeder wirkenden vorvernetzten Dichtkörper 16 reduzieren sich u. a. die Anfangs-Reibverluste und es bildet sich ein der Einbausituation angepaßter (vergrößert dargestellter) Labyrinthspalt 17 zwischen Dichtkörper 16 und Radialschenkel 11, wobei Toleranzen und die vorgegebene Einbaulage ausgeglichen werden.

In Figur 2 ist die in Figur 1 abgebildete Wellendichtung 1 in vergrößerter und leicht abgewandelter Form dargestellt, und zwar in der Einbaulage. Der Radialschenkel l des Laufringes 6 ist ähnlich, wie vorab beschrieben, zunächst etwa axial in Richtung auf das Gehäuse 5 abgebogen 12, dann aber, ein konvex gekrümmtes Querschnittsprofil 18 bildend, unter einem Winkel in Richtung des profilierten Axialschenkels 13 des Gehäuses 5 abgebogen. Gleichzeitig ist der Axialschenkel 13 im Bereich seines freien Endes 19 radial in Richtung auf den Laufring 6 abgebogen. Durch diese Maßnahme wird der Laufring 6 für Transport und Montage formschlüssig in dem Gehäuse 5 gehalten. Der nur teilweise vernetzte Dichtkörper 16 ist in dem durch die Schenkel 10, 11 und 13 begrenzten Raum 15 angeordnet, dergestalt, daß er unter axialer Vorspannung ausschließlich an dem konvex gekrümmten Teil 18 des Radialschenkels 11 anliegt. Auch hier wird sich analog zur in Fig. 1 dargestellten Einbausituation ein Labyrinthspalt einstellen, nachdem der Dichtkörper 16 vollständig vernetzt seine endgültige Form angenommen hat.

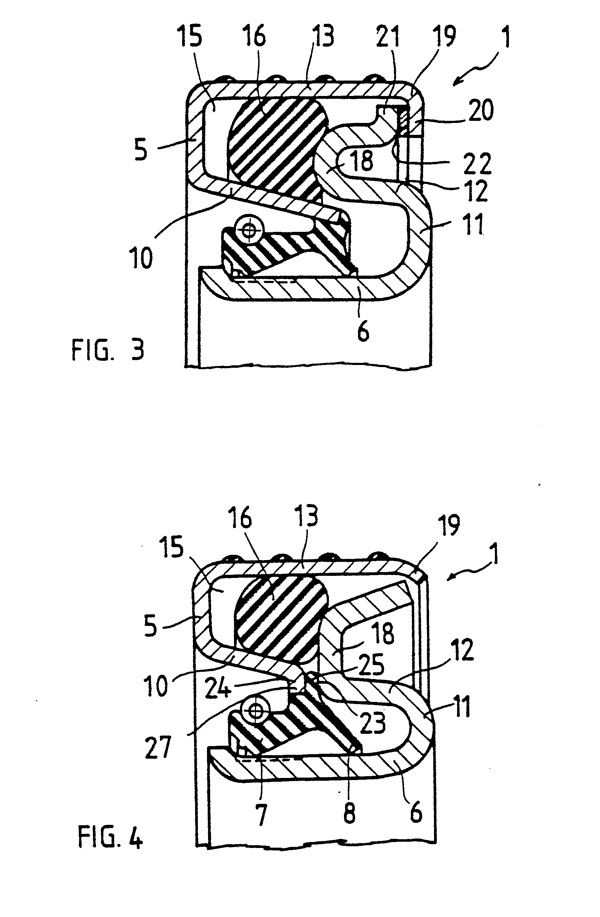

In den Figuren 3-5 ist eine Wellendichtung analog zu Fig. 2 dargestellt. Diese ist jedoch zur Vermeidung von Beschädigungen während des Einpreßvorganges sowie von Folgeschäden im Betriebszustand durch unzulässige Temperaturerhöhung mit Anschlagflächen versehen.

Figur 3 zeigt, daß der Radialschenkel 13 im Bereich seines freien Endes 19 mit einer radialen Abbiegung 20 versehen ist. Diese wird durch Umbördeln erzeugt, nachdem die Teile der Wellendichtung 1 axial ineinandergesteckt worden sind. Am dieser Abbiegung axial gegenüberliegenden, Schenkelteil 21 des Radialschenkels 11 des Laufringes 6 ist eine Anschlagfläche 22 aus einem selbstschmierenden Lagerwerkstoff, wie z. B. Delrin, angeformt. Diese verhindert zum einen Beschädigungen an den Metallteilen beim Einpressen und vermindert zum anderen, bedingt durch gute Gleiteigenschaft, unzulässige Temperaturerhöhung innerhalb der Wellendichtung 1 im Betriebszustand.

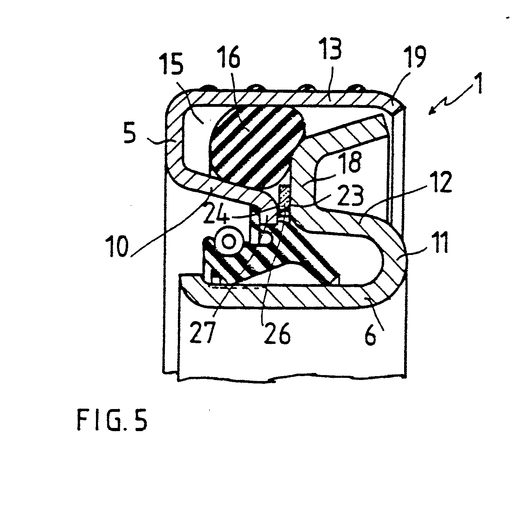

Figur 4 zeigt, daß der Elastomerwerkstoff der Dichtlippen 7, 8 radial nach außen bis in den Bereich der Anschlagflächen 23, 24 hinein verlängert ist 25. Diese werden gebildet durch den etwa radial verlaufenden Teil 18 des Radialschenkels 11 des Laufringes sowie durch einen vom etwa axial verlaufenden Schenkel 10 radial abgebogenen Bereich 27.

Figur 5 ist zu entnehmen, daß axial zwischen den beiden Anschlagflächen 23, 24 ein separater, scheibenförmiger Körper 26 vorgesehen ist, der vorzugsweise ebenfalls aus einem selbstschmierenden Lagerwerkstoff gebildet ist.

## Patentansprüche

1. Wellendichtung mit integriertem Laufring (6), bestehend aus einem formstabilen, profilierten Gehäuse (5) mit einer Umfangsfläche zur drehfesten Aufnahme in einem Maschinenteil und mindestens einer, gegebenenfalls federbelasteten Dichtlippe (7, 8) aus elastischem Werkstoff, die radial auf einer axialen Lauffläche des auf ein korrespondierendes Maschinenteil drehfest aufziehbaren winkelförmigen Laufringes (6) aufliegt, dessen Radialschenkel formschlüssig in dem Gehäuse gehalten ist sowie einem zwischen dem Radialschenkel des Laufringes und dem Gehäuse angeordneten Dichtkörper, dadurch gekennzeichnet, daß der Dichtkörper (16) aus einem unvollständig vernetzten Elastomer-Werkstoff besteht, der erst bei auftretender Betriebstemperatur vollständig vernetzt.

2. Wellendichtung nach Anspruch 1, dadurch gekennzeichnet, daß der Dichtkörper (16) aus Nitrilbutadien-Kautschuk besteht.

3. Wellendichtung nach den Ansprüchen 1 und 2, dadurch gekennzeichnet, daß der Dichtkörper (16) vor dessen Montage ein etwa rechteckiges Querschnittsprofil aufweist.

4. Wellendichtung nach den Ansprüchen 1 bis 3, dadurch gekennzeichnet, daß der den Dichtkörper (16) aufnehmende Raum (15) zwischen Gehäuse (5) und Laufring (6) ein zum Laufring (6) sich erstreckendes konisches Querschnittsprofil aufweist.

5. Wellendichtung nach den Ansprüchen 1 bis 4, dadurch gekennzeichnet, daß der mit dem Dichtkörper (16) im, unvollständig vernetzten Zustand in Berührung stehende Radialschenkel (11) des Laufringes (6) eine konvex gekrümmte Berührungs fläche (18) aufweist.

6. Wellendichtung nach den Ansprüchen 1 bis 5, gekennzeichnet durch einen im vollständig vernetzten Zustand des Dichtkörpers (16) sich einstellenden, der Kontur der Fläche des Radialschenkels (11) im wesentlichen folgenden axialen Labyrinthspalt (17) zwischen Dichtkörper (16) und Radialschenkel (11).

7. Wellendichtung nach den Ansprüchen 1 bis 6, dadurch gekennzeichnet, daß im Bereich der einander etwa axial gegenüberliegenden Schenkel (20, 21, 10, 18) des Laufringes (6) und des Gehäuses (5) Anschlagsflächen (22, 23, 24) gebildet sind.

8. Wellendichtung nach den Ansprüchen 1 bis 7, dadurch gekennzeichnet, daß die Anschlagflächen (22, 25, 26) aus einem elastomeren oder thermoplastischen Material gebildet sind.

9. Wellendichtung nach den Ansprüchen 1 bis 8, dadurch gekennzeichnet, daß die Anschlagflächen (22, 25) aus einem selbstschmierenden Gleitlagerwerkstoff gebildet sind.

10. Wellendichtung nach den Ansprüchen 1 bis 9, dadurch gekennzeichnet, daß die Anschlagflächen (26) durch lose zwischen den Radialschenkeln beziehungsweise Schenkelbereichen (27, 18) des Gehäuses (5) und des Laufringes (6) eingelegte scheibenförmige Elemente (26) gebildet sind.

11. Wellendichtung nach den Ansprüchen 1 bis 10, dadurch gekennzeichnet, daß die Anschlagflächen (22, 25) mit den korrespondierenden Radialschenkeln beziehungsweise Schenkelbereichen (21, 27) des Gehäuses (5) und/oder des Laufringes (6) fest verbunden sind.

12. Wellendichtung nach den Ansprüchen 1 bis 11, dadurch gekennzeichnet, daß das Elastomermaterial der Dichtlippen (7, 8) zumindest bis in den die Anschlagflächen (23, 24) bildenden Bereich des die Dichtlippen (7, 8) tragenden Gehäuses (5) verlängert ist.

## Claims

1. Shaft seal with integrated wear sleeve (6), consisting of a dimensionally stable, profiled housing (5) with one circumferential surface for torsion-free mounting in a machine component and at least one sealing lip (7, 8) made of an elastic material and if appropriate spring-loaded, which rests radially on an axial running surface of the angular wear sleeve (6) which can be slipped torsion-free onto a corresponding machine component and whose radial arm is held positively in the housing, and a sealing member disposed between the radial arm of the wear sleeve and the housing, characterized by the fact that the sealing member (16) is made of an incompletely vulcanized elastomeric material which only fully cures at operating temperature.

2. Shaft seal according to claim 1, characterized by the fact that the sealing member (16) is made of nitrilebutadiene-rubber.

3. Shaft seal according to claims 1 and 2, characterized by the fact that the sealing member (16) has a roughly rectangular cross-sectional profile prior to installation.

4. Shaft seal according to claims 1 to 3, characterized by the fact that the space (15) between housing (5) and wear sleeve (6) accommodating the sealing member (16) has a tapered cross-sectional profile extending to the wear sleeve (6).

5. Shaft sleeve according to claims 1 to 4, characterized by the fact that the radial arm (11) of the wear sleeve (6) in contact with the sealing member (16) in incompletely vulcanized state has a convex contact surface (18).

6. Shaft seal according to claims 1 to 5, characterized by an axial labyrinthine gap (17) between sealing member (16) and radial arm (11) which arises when the sealing member (16) is in completely vulcanized state and essentially follows the surface contour of the radial arm (11).

7. Shaft seal according to claims 1 to 6, characterized by the fact that stop faces (22, 23, 24) are formed in the region where the arms (20, 21, 10, 18) of the wear sleeve (6) and of the housing (5) are axially roughly opposite one another.

8. Shaft seal according to claims 1 to 7, characterized by the fact that the stop faces (22, 25, 26) are made of an elastomeric or thermoplastic material.

9. Shaft seal according to claims 1 to 8, characterized by the fact that the stop faces (22, 25) are made of a self-lubricating sliding bearing material.

10. Shaft seal according to claims 1 to 9, characterized by the fact that the stop faces (26) take the form of loose disc-shaped elements (26) inserted between the radial arms or arm regions (27, 18) of the housing (5) and the wear sleeve (6).

11. Shaft seal according to claims 1 to 10, characterized by the fact that the stop faces (22, 25) are firmly attached to the corresponding radial arms or arm regions (21, 27) of the housing (5) and/or the wear sleeve (6).

12. Shaft seal according to claims 1 to 11, characterized by the fact that the elastomeric material of the sealing lips (7, 8) is lengthened at least up to the region of the housing (5) bearing the sealing lips (7, 8) and forming the stop faces (23, 24).

**Revendications**

1. Joint d'arbre muni d'une bague de roulement (6) intégrée, se composant d'un carter (5) profilé indéformable ayant une surface périphérique pour son logement sans possibilité de rotation dans une partie de machine et d'au moins une lèvre d'étanchéité (7, 8), le cas échéant soumise à l'action d'un ressort, faite d'un matériau élastique et reposant radialement sur une portée axiale de la bague de roulement (6) angulaire montable sans tourner sur une partie de machine correspondante, bague de roulement dont l'aile radiale est maintenue mécaniquement dans le carter, de même que d'un corps d'étanchéité (16) disposé entre l'aile radiale de la bague de roulement et le carter, caractérisé en ce que le corps d'étanchéité (16) se compose d'un matériau élastomère incomplètement réticulé qui se réticule seulement lorsqu'il est soumis à la température de fonctionnement.

2. Joint d'arbre selon la revendication 1, caractérisé en ce que le corps d'étanchéité (16) se compose de caoutchouc nytrile-butadiène.

3. Joint d'arbre selon les revendications 1 et 2, caractérisé en ce que le corps d'étanchéité (16) présente avant son montage une section à peu près rectangulaire.

4. Joint d'arbre selon les revendications 1 à 3, caractérisé en ce que l'espace (15) de logement du corps d'étanchéité (16) comporte entre le carter (5) et la bague de roulement (6) une section conique s'étendant en direction de la bague de roulement (6).

5. Joint d'arbre selon les revendications 1 à 4, caractérisé en ce que l'aile radiale (11) de la bague de roulement (6), qui est en contact avec le corps d'étanchéité (16) incomplètement réticulé, comporte une surface de contact (18) courbe.

6. Joint d'arbre selon les revendications 1 à 5, caractérisé par la formation — le corps d'étanchéité (16) étant totalement réticulé — d'un interstice de labyrinthe axial (17) entre le corps d'étanchéité (16) et l'aile radiale (11) et épousant sensiblement le contour de la surface de l'aile radiale (11).

7. Joint d'arbre selon les revendications 1 à 6, caractérisé en ce que des surfaces d'arrêt (22, 23, 24) sont formées au niveau des ailes situées en vis-à-vis approximativement axialement (20, 21, 10, 18) de la bague de roulement (6) et du carter (5).

8. Joint d'arbre selon les revendications 1 à 7, caractérisé en ce que les surfaces d'arrêt (22, 25, 26) sont faites d'un matériau élastomère ou thermoplastique.

9. Joint d'arbre selon les revendications 1 à 8, caractérisé en ce que les surfaces d'arrêt (22, 25) sont faites d'un matériau de palier à glissement autolubrifiant.

10. Joint d'arbre selon les revendications 1 à 9, caractérisé en ce que les surfaces d'arrêt (26) sont formées par des éléments libres de forme circulaire (26) situés entre les ailes radiales ou les zone d'ailes (27, 18) du carter (5) de la bague de roulement (6).

11. Joint d'arbre selon les revendications 1 à 10, caractérisé en ce que les surfaces d'arrêt (22, 25) sont assujetties aux ailes radiales correspondantes ou aux zones d'ailes (21, 27) du carter (5) et/ou de la bague de roulement (6).

12. Arbre d'étanchéité selon les revendications 1 à 11, caractérisé en ce que le matériau élastomère des lèvres d'étanchéité (7, 8) est prolongé au moins jusque dans la zone formant les surfaces d'arrêt (23, 24) du carter (5) supportant les lèvres d'étanchéité (7, 8).

FIG. 1

FIG. 2

FIG. 3

FIG. 4

FIG. 5